# EUROPEAN PATENT SPECIFICATION

(11) **EP 3 341 216 B1**
(45) Date of publication and mention of the grant of the patent: **25.09.2019**
(21) Application number: 16770591.2
(22) Date of filing: 26.08.2016
(51) Int. Cl.: B42D 25/00

(54) **SINGLE OR DUAL TRANSFER PROCESS FOR PREPARING AND TRANSFERING SHARPLY DEFINED SINGLE ELEMENTS TO OBJECTS TO BE PROTECTED**
EINZEL- ODER DOPPELTRANSFERVERFAHREN ZUM VORBEREITEN UND TRANSPORTIEREN VON ENG DEFINIERTEN EINZELELEMENTEN AN ZU SCHÜTZENDE OBJEKTE
PROCÉDÉ DE TRANSFERT SIMPLE OU DOUBLE POUR PRÉPARER ET TRANSFÉRER DES ÉLÉMENTS UNIQUES DÉFINIS NETTEMENT SUR DES OBJETS À PROTÉGER

(30) Priority: 27.08.2015 US 201562210578 P
(43) Date of publication of application: 04.07.2018
(73) Proprietor: Crane Security Technologies, Inc., Nashua, NH 03063 (US); Visual Physics, LLC, Alpharetta, GA 30005 (US)
(72) Inventor: COTE, Paul F., Hollis, NH 03049 (US); YEAGER, Daniel, Alpharetta, GA 30005 (US); SCHEXNAYDER, Todd, Dacula, GA 30019 (US)
(74) Representative: Grünecker Patent- und Rechtsanwälte PartG mbB
(86) International application number: PCT/US2016/048888
(87) International publication number: WO 2017/035437

(56) References cited:
- EP-A2- 1 897 700

## Description

### TECHNICAL FIELD

The present invention generally relates to a single or dual transfer process for preparing and transferring relatively non-tearable or tear resistant single elements having sharp definition to objects to be protected, particularly security documents such as banknotes.

### BACKGROUND

Foil transfer processes (*e.g*., hot stamping), which involve transferring a dry film to a substrate through heat and pressure, are well known in several industries. For example, diffraction foil types are used as tamper proof seals in low level brand security, and on transit passes, while holographic foil types are used in security and brand protection.

A typical foil construction used in these transfer processes is made up of a carrier (*e*.*g*., a polyester film having a thickness ranging from about 12 to about 38 microns), a thin release coat, a tie or color coat, an optional embossed (*e.g*., cast embossed) layer, a vacuum deposited aluminum layer, and a heat-activated adhesive layer.

The foils are applied with a patterned die which when positioned on the foil (optionally aligned with an image pattern on the foil) can transfer the foil in the shape of the heated die. The aluminum layer of the transfer foil may be vacuum deposited on top of an embossed layer (*e*.*g*., a diffraction or holographic patterned layer) or embossing may occur after vacuum deposition of the aluminum layer. The vacuum deposited aluminum layer of the transfer foil may also be demetalized to form a pattern and/or shape in addition to the transferred pattern and/or shape.

This type of transfer relies on the very fragile nature of the transferred pattern and/or shape which allows it to rupture with a clean break at the die edge. The thickness and type of release coat, the nature of the layer(s) being transferred, and the thickness and type of adhesive are adjusted to arrive at a suitable operating window to achieve an acceptable degree of resolution for the pattern and/or shape being transferred. In addition, the temperature, dwell time, and pressure as well as the peeling conditions and machine speed are also adjusted to optimize and facilitate the transfer. Very detailed and precise patterns have been transferred cleanly and reliably using this method on a variety of materials and substrates in many industries.

Relatively non-tearable or tear resistant materials such as micro-optic film materials and resin structures can be difficult or impossible to effectively transfer using known foil transfer techniques. In particular, the ability to find a suitable operating window for obtaining a clean and consistent break is extremely difficult due to the increased structural strength of these film materials and resin structures. In fact, the operating window for reliable conversion is either too small or non-existent for practical manufacturing practices.

The phrase "relatively non-tearable or tear resistant", as used herein, is intended to mean a material or structure that is moderately to highly resistant to tearing or cleaving in either or both the longitudinal and width directions.

Document EP 1 897 700 A2 discloses a pre-patch transfer sheet according to the preamble of claim 1.

### SUMMARY OF THE INVENTION

In view of the above, a need exists for tools, mechanisms and processes that can utilize a foil transfer process (*e.g*., hot stamping) to rapidly and reliably transfer discontinuous security features (*e*.*g*., isolated single elements such as patches/stripes), such as relatively non-tearable or tear resistant film materials and resin structures, to an object to be protected (*e.g*., security paper).

The present invention provides a pre-patch transfer sheet according to claim 1, a pre-patch transfer die-cut sheet according to claim 14, and a method according to claim 8, embodied as a single or dual transfer process; each for use in preparing/transferring sharply defined single elements to objects to be protected.

In a first aspect, the invention provides a single transfer process for transferring isolated single elements to an object to be protected. The process produces a pre-patch transfer die-cut sheet that is then used in applying the isolated single elements to an object to be protected. In one embodiment, the process comprises:
(a) providing a carrier substrate;
(b) applying a separation layer (*e*.*g*., a waxy or lower adhesion separation layer) to a surface of the carrier substrate;
(c) applying a relatively non-tearable or tear resistant film material or resin structure (*e*.*g*., a micro-optic film material assembly) to a surface of the separation layer on the carrier substrate;
(d) applying an adhesive layer to a surface of the applied film material or resin structure;
(e) cutting a plurality of cuts into at least one of the adhesive layer, the film material or resin structure, or the separation layer to produce single elements (*e*.*g*., discontinuous and isolated patches, long strips) and a continuous background element and/or discontinuous background elements, thereby forming a pre-patch transfer die cut sheet.

In one exemplary embodiment, the pre-patch transfer die-cut sheet comprises:
a carrier substrate;
a pre-patch transfer assembly that is affixed along a first side of the carrier substrate and comprising (1) at least one isolated element for transfer having (i) a micro-optic film material assembly that produces a synthetic image and (ii) an adhesive layer affixed along a first side of the micro-optic film material assembly opposite the carrier substrate; and (2) a background or waste element/region adjacent to or surrounding the at least one isolated element for transfer that is affixed along the first side of the carrier substrate and that is separated from the at least one isolated element for transfer by one or more cut marks.

In another aspect of the invention, the invention provides a dual transfer process whereby step (f) below is added to the single transfer process detailed in steps (a) through (e) above. Step (f) comprises
(f) transferring the background element or background elements from the pre-patch transfer die-cut sheet and leaving the isolated single elements affixed to the carrier substrate along the first side of the carrier substrate, thereby forming a pre-patch transfer sheet.

In one exemplary embodiment, the pre-patch transfer sheet comprises:
a carrier substrate;
a pre-patch transfer assembly that is affixed along a first side of the carrier substrate and comprising (1) at least one isolated element for transfer having (i) a micro-optic film material assembly that produces a synthetic image and (ii) an adhesive layer affixed along a first side of the micro-optic film material assembly opposite the carrier substrate, and (2) a background area from which the background or waste element/region has been removed, which is adjacent to or surrounds the at least one isolated element for transfer.

In another aspect of the invention, a process is provided for applying the isolated single elements to an object to be protected. The process comprises steps (a) through (e) as detailed above in the single transfer process and dual transfer process but further includes a step (g) which comprises:
(g) transferring the cut single elements from the pre-patch transfer die-cut sheet or from the pre-patch transfer sheet to the objects to be protected (*e*.*g*., banknotes) to thereby provide a protected object having at least one isolated single element (*e*.*g*., stripe or patch security element).

Step (f) above is not part of the single transfer process of the present invention, but is part of the inventive dual transfer process.

The following Brief Description of the Drawings and the Detailed Description of the Invention provide further explanation of embodiments of the claimed invention.

### BRIEF DESCRIPTION OF THE DRAWINGS

The present disclosure may be better understood with reference to the following drawings. Various layers shown in the drawings are not necessarily to scale, emphasis instead being placed upon clearly illustrating the principles of the present disclosure. While exemplary embodiments are disclosed in connection with the drawings, there is no intent to limit the present disclosure to the embodiment or embodiments disclosed herein.
**FIG. 1** is a sectional side view of an exemplary embodiment of the transfer sheet during the dual transfer process of the present invention before the transfer sheet and a sacrificial carrier substrate are brought together and areas surrounding cut single elements on the transfer sheet (*i.e.*, waste regions) are transferred to the sacrificial carrier substrate, leaving only cut, isolated single elements on the transfer sheet;
**FIG. 2** is a top, side perceptive view of the sacrificial carrier substrate shown in **FIG. 1** with bonded waste areas or regions partially separated from the transfer sheet;
**FIG. 3** is a schematic sectional elevation of one exemplary embodiment for transferring the sharply defined single elements from the transfer sheet to an object to be protected such as a banknote; and
**FIG. 4** is a schematic, top planar view of a converting machine wherein a web of high value documents is precisely brought into contact with hot stamping dies and a web of isolated patches.

### DETAILED DESCRIPTION OF THE INVENTION

Other features and advantages of the invention will be apparent to one of ordinary skill from the following detailed description. Unless otherwise defined, all technical and scientific terms used herein have the same meaning as commonly understood by one of ordinary skill in the art to which this invention belongs. Unless demanded by the claims, the materials, methods, and examples are illustrative only and not intended to be limiting.

One aspect of the invention provides a single transfer process. This process comprises (a) providing a carrier substrate; (b) applying a separation layer to a surface of the carrier substrate; (c) applying a film material or resin structure (*e*.*g*., a micro-optic film material assembly) to a surface of the separation layer (d) applying an adhesive layer to a surface of the applied film material or resin structure; (e) cutting a plurality of cuts or cut marks into at least one of the adhesive layer, the film material or resin structure, or the separation layer to produce isolated single elements for transfer and a background element or background elements.

By this process, a pre-patch transfer die-cut sheet is produced that comprises (1) a carrier substrate; and (2) a pre-patch transfer assembly that is affixed along a first side of the carrier substrate and which itself comprises (a) at least one isolated element for transfer which comprises (i) a material layer disposed along a first side of the carrier substrate and which in its uncut state may not be susceptible to conventional die-stamping processes; and (ii) an adhesive layer affixed along a first side of the material layer and opposite the carrier substrate; and (b) a background or waste element/region that is adjacent to or surrounds the at least one isolated element for transfer that is itself affixed along the first side of the carrier substrate and is separated from the isolated element for transfer by one or more cut marks.

In an exemplary embodiment, the single transfer process further comprises transferring the isolated element for transfer to an object to be protected. Here it should be noted that the cutting step (e) can be done by various methods including but not limited to the use of a die-cutting device having particular design shapes or configurations. The cutting step produces a separation between the isolated elements and the background element or background element(s). Here, it should be understood that the isolated element for transfer and the background element(s) may be of the same or of different layered construction. However, in preferred embodiments, the background element(s) and the isolated element for transfer are of identical construction. The die cutting step can be applied to cut through any number of the layers but must leave uncut at least one layer, preferably the layer at the furthest distance from the adhesive layer. In a particular embodiment, the cutting step (e) comprises applying the die to cut through the adhesive layer, the tear resistant material layer, and any other layer(s) between the material layer and the carrier substrate. This cutting step produces a pre-patch transfer die-cut sheet wherein the cut marks of a desired depth separates the isolated elements for transfer from the background element(s) for removal.

In the application step (g) a die stamp having a desired design with desired pressure points is placed in alignment with the isolated elements for transfer and applied to an opposing second side of the carrier substrate while the pre-patch transfer die-cut sheet is affixed, via the adhesive layer, to an object to be protected. The die stamp through applied pressure and/or heat applied by the pressure points in the die-stamp's design, applies a force and/or heat to the isolated elements for transfer and a lesser or non-existent force and/or heat to the background element(s) for removal. Due to the cut marks, the isolated elements for transfer shall be transferred and affixed to the object to be protected and the background element(s) and the carrier substrate can be cleanly and rapidly removed from object leaving behind the isolated element(s) for transfer on the object.

In the dual transfer process, a step (f) is interjected between steps (e) and (g), whereby a sacrificial carrier layer is applied to a first side of the adhesive layer in the pre-patch transfer die-cut sheet, opposite the carrier substrate. In one embodiment of this aspect, the die-stamp is applied to a first side of the sacrificial carrier layer opposite the carrier substrate and the adhesive layers. Here however, the design on the die-stamp is such that pressure points are aligned with the background element(s) for removal. Due to the cut marks, the background element(s) for removal can be easily and rapidly removed from the carrier substrate onto the sacrificial carrier substrate, leaving behind the isolated element(s) for transfer on the carrier substrate. This forms the pre-patch transfer sheet. In a second transfer step, the pre-patch transfer sheet is applied to an object to be protected by placing the adhesive layer of the at least one isolated element for transfer against the object. Advantageously, while it is possible to use a die-stamp with a design having pressure points corresponding to the placement of the at least one isolated element for transfer; this is not required. By this process, it is possible to use a die-stamp of various designs with or without pressure points corresponding to the placement of the at least one isolated element for transfer. This significantly increases the speed at which the isolated element for transfer can be transferred to the object to be protected. The sacrificial carrier substrate may be composed of various materials which may be different or identical to the carrier substrate. For example, and as described below, the material may comprise polyethylene terephthalate (PET).

In one embodiment, the pre-patch transfer die-cut sheet or the pre-patch transfer sheet may have any combination of alignment between the separation layer, the tear resistant material, and the adhesive layer. For example, the separation layer may cover the entire carrier substrate or it cover only the areas corresponding to the isolated element(s) for transfer, or some discontinuous area slightly larger (*e*.*g*., 0.1mm to 0.4mm) or slightly smaller (*e*.*g*., 0.2mm) than the isolated element(s) for transfer. Similarly, it is also contemplated that additional layers may be incorporated into the sheets that are similarly registered or unregistered to the isolated element(s) for transfer; this includes the adhesive layer described herein or additional adhesive layers. For example, in one embodiment the adhesive layer described herein may cover the isolated tear resistant material or it may cover the background element(s) as well. Where it covers the background element(s) as well, one of ordinary skill in the art will understand that the thickness of such an adhesive layer must be selected to avoid interfering with the clean separation of the background element(s) from the isolated element(s) for transfer during the application process to the sacrificial carrier substrate or to the object to be protected.

In one embodiment, the object to be protected is an object that may be counterfeited or misidentified. Persons of ordinary skill in the art would be able to identify such objects. For example, such object may include security paper used to form security documents such as high value documents including but not limited to currency banknotes, checks, promissory notes and the like. Alternatively, the security documents may be government issued documents including but not limited to documents such as passports, ID cards, stamps and the like. It is also contemplated herein that the isolated elements for transfer may be applied to commercial products. These isolated elements are suitable and are contemplated to provide security and/or aesthetic effects to the products or objects to which they are attached.

The cutting step (e) allows the use of a foil stamping process in the application of material (*e*.*g*., micro-optic film material assembly, or the like) to an object with high resolution. That is to say that the isolated element(s) for transfer, including but not limited to patches of micro-optic film material assembly, when applied to the object to be protected, will have clean sharp lines. In one embodiment, the edges of the isolated elements for transfer are straight. In another embodiment, the lines have very few ridges and are therefore sharply defined. This improves the printability of the object, where for example it is a banknote, because there is less fraying of print indicia and better (*i*.*e*., cleaner lines) resolution of the printed indicia. This also improves the aesthetic effect of the object.

In an exemplary embodiment of the single transfer process, the plurality of single elements are elongate patches or stripes that extend along the length of a continuous sheet of security paper or security documents such as banknotes. Step (e) is performed using a precision die cutting operation and step (g) is performed using a die stamping operation.

In one such embodiment (*i.e.*, type 1, registered stripe), a series of closely spaced die cut lines (*e*.*g*., 5 cuts at 2 millimeter (mm) increments) are placed in the elongate patches or stripes at those locations where the lead edge and optionally also the rear edge of the stamping die will contact the elongate patches during transfer from the transfer sheet to the continuous sheet of security documents. The series of closely spaced die cut lines allows for registration uncertainty. As noted above, no waste removal step (*i*.*e*., step (f)) is required using this technique.

In another such embodiment (*i*.*e*., type 2, random registration), which may be combined with the previous embodiment, the elongate patches are cut to assure that each security document (*e*.*g*., banknote) has an elongate patch or stripe starting at least as high as the first document or note and to minimize any portion of any patch or stripe spanning more than one note (*i.e.*, tail length overshoot). For example, while it is not known where the starting and ending edges of each stripe will fall, one can calculate the distance from the stripe start to the top of the first document or note, for example, 20 mm. The elongate patches are then cut at regular intervals along their length (*e*.*g*., every 20 mm or less). These cuts may further frustrate potential harvesting. Moreover, the shape of the cut may be complex to add to the design if visible in the final document or note.

In an exemplary embodiment of the dual transfer process, step (e) is performed using a precision die cutting operation, and step (f) is performed using a patterned die stamping operation. During step (f), the carrier substrate and the sacrificial carrier substrate are brought together, subjected to the patterned die stamping operation (including heat and pressure), and after each substrate or web has had sufficient time to cool, the two substrates or webs are peeled from each other and the background or waste regions surrounding the single elements (*e*.*g*., patches) stay with the sacrificial carrier web and the original carrier web is left with the desired patches. The adhesive is now only on an upper surface of each patch, which may then be transferred to, for example, a security document.

In an exemplary embodiment of the inventive single or dual transfer process, one or more additional cut lines are incorporated in the cutting die design, which do not have a corresponding design element on the stamping or transfer die. The additional cut line(s) within each single element (*e*.*g*., patches, long strips) constitutes a very desirable secure tearing feature that provides additional tamper resistance, discouraging even careful removal. These cut lines can also function to add to the visual design and thus the security value of the single elements.

In another exemplary embodiment, step (g), which is also performed using a die stamping operation, involves the transfer of the single elements in register to one or more designs on, for example, a security document.

The present invention further provides a process for forming a transfer sheet made up of a plurality of relatively non-tearable or tear resistant, single elements on a carrier substrate, each single element having a sharp definition, wherein the process comprises process steps (a)-(e), as described above.

The terms "sharply defined" and "sharp definition", as used herein, are intended to mean single elements having clearly defined, distinct shapes and details including sharp corners, small radius (*e*.*g*., 0.2 millimeter (mm)) holes, islands, patterned or serrated edges, and/or text elements, which are prepared using a precision die cutting operation.

The present invention also provides such a transfer sheet, which in an exemplary embodiment comprises a plurality of micro-optic single elements for transfer to objects to be protected, wherein each micro-optic single element forms one or more synthetically magnified images.

In one such embodiment, the transfer sheet is a pre-patch transfer, die-cut sheet (*i*.*e*., a sheet before areas surrounding the cut single elements are transferred from the carrier substrate to a sacrificial carrier substrate and before the cut single elements are transferred to an object(s) to be protected). The inventive sheet comprises:
a carrier substrate;
a pre-patch transfer assembly that is affixed along a first side of the carrier substrate that comprises:
   at least one isolated element for transfer having (i) a micro-optic film material assembly that produces a synthetic image and (ii) an adhesive layer affixed along a first side of the micro-optic film material assembly opposite the carrier substrate; and
   a background or waste element adjacent to or surrounding the at least one isolated element for transfer that is affixed along the first side of the carrier substrate and that is separated from the at least one isolated element for transfer by one or more cut marks.

In another such embodiment, the transfer sheet is a pre-patch transfer sheet (*i.e.*, a sheet after areas surrounding the cut single elements are transferred from the carrier substrate to a sacrificial carrier substrate but before the cut single elements are transferred to an object(s) to be protected). The inventive sheet comprises:
a carrier substrate; and
a pre-patch transfer assembly that is affixed along a first side of the carrier substrate and that comprises:
   at least one isolated element for transfer having (i) a micro-optic film material assembly that produces a synthetic image and (ii) an adhesive layer affixed along a first side of the micro-optic film material assembly opposite the carrier substrate; and
   a background area from which material has been removed that is adjacent to or surrounds the at least one isolated element for transfer.

A process for applying one or more single elements to an object to be protected is also provided, the process comprising using the transfer sheet described above to transfer the single element(s) onto a surface of the object.

Further provided is an object to be protected, the object displaying one or more relatively non-tearable or tear resistant, single elements having sharp definition applied to a surface thereof. In an exemplary embodiment, the one or more single elements are (a) micro-optic single elements, (b) prepared and applied using the single or dual transfer process described above, and/or (c) applied using the transfer sheet described above.

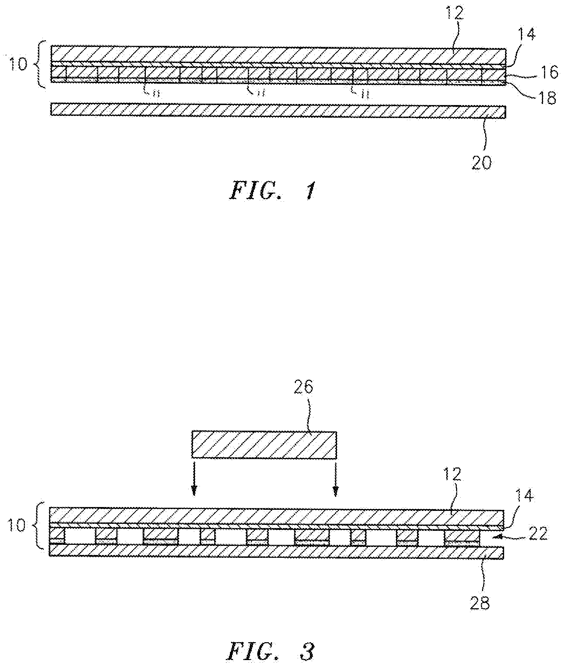

Referring now to **FIG. 1**, there is shown an exemplary embodiment of the transfer sheet 10 during the dual transfer process of the present invention with cut marks 11 before the transfer sheet and a sacrificial carrier substrate 20 are brought together and before areas surrounding cut single elements on the transfer sheet (*i*.*e*., waste regions) are transferred to the sacrificial carrier substrate. The transfer sheet 10 comprises four (4) layers including a carrier substrate 12. The carrier substrate 12 has a thickness ranging from about 10 to about 30 microns and may be formed of one of a number of different types of material including a polymeric film prepared using, for example, cellulose tri-acetate, polyester, polyethylene, PET, polypropylene (*e*.*g*., biaxially oriented polypropylene), polystyrene, polyvinyl carbonate, polyvinylidene chloride, and combinations thereof. A separation layer 14 made from a wax or lower adhesion or tack material (*e*.*g*., polyethylene, silicone) having a thickness of less than or equal to about 1 micron (preferably ranging from about 1 molecular layer to about 1 micron is applied to the carrier substrate 12. When the separation layer 14 is used with a micro-optic film material having an exposed lens layer, the separation layer may have a relief structure on one surface that mates or conforms to the exposed lens layer of the micro-optic film material.

A relatively non-tearable or tear resistant film material or resin structure 16 having a thickness ranging from about 5 to about 30 microns is applied to the separation layer 14.

The material or structure 16 is a micro-optic film material. As noted above, such materials form or project one or more synthetically magnified optical images, and generally comprise: at least one arrangement of image icons, and at least one arrangement of optionally embedded focusing elements positioned to form and project one or more synthetic images of at least a portion of the arrangement(s) of image icons. These projected images may show a number of different optical effects. Such structures are described in U.S. Patent No. 7,333,268 to Steenblik et al.*,* U.S. Patent No. 7,468,842 to Steenblik et al.*,* U.S. Patent No. 7,738,175 to Steenblik et al.*,* U.S. Patent Application Publication No. 2014/0376091 A1 to Jordan et al., International Patent Publication Number WO 2005/106601 A2 to Commander et al.*,* and International Patent Publication Number WO 2007/076952 A2 to Kaule et al.

The term "micro-optic film material" or "micro-optic film material assembly", as used herein, is intended to mean a system for projecting one or more synthetic images that comprises at least one arrangement of optionally embedded focusing elements (*e*.*g*., microlenses) and at least one arrangement of image icons (*e*.*g*., image icons (i) in the form of posts formed from one or more pigmented materials, (ii) in the form of posts where areas surrounding the posts are coated and/or partially or completely filled with one or more pigmented materials, or (iii) in the form of voids or recesses which are coated and/or partially or completely filled with one or more pigmented materials), wherein the arrangement(s) of optionally embedded focusing elements are positioned to form and project one or more synthetic images of at least a portion of the arrangement(s) of image icons.

The terms "synthetically magnified image" or "synthetic image", as used herein, is intended to mean that the image is synthetized by the united performance of a multiplicity of individual focusing element/image icon systems. Each focusing element magnifies a dot/very small space of the image below the focusing element, the dots are then combined and projected, thus leading to a magnified image, which is a synthetic image.

An adhesive layer 18 having a thickness ranging from about 3 to about 12 microns is applied to a surface of the film material or resin structure 16. Suitable adhesives are not limited and include, but are not limited to, thermoplastic adhesive systems including acrylics (*e*.*g*., poly(methyl methacrylate)) and polyurethanes, and thermally activated adhesives (*i*.*e*., hot melt or heat seal adhesives).

The sacrificial carrier substrate 20 has a thickness ranging from about 8 to about 40 microns and may be formed of the same material(s) noted above for carrier substrate 12. The sacrificial carrier substrate 20 may also be formed of paper materials or combinations of paper, film(s) and coating(s) that satisfactorily bond to the adhesive layer 18. Optionally, the sacrificial carrier substrate 20 can be coated with an adhesive that is similar or complementary to the adhesive used to form adhesive layer 18.

Prior to bringing the sacrificial carrier substrate 20 into contact with the adhesive layer 18, a precision die cutting operation is used to cut a plurality of single elements (*e*.*g*., patches, long strips) 22 in the film material or resin structure 16 to a depth that does not reach (or substantially penetrate) the carrier substrate 12, thereby forming the inventive transfer sheet 10. Optionally, the precision die cutting operation may be done in registration to design elements *(e.g.,* a patch or other region of small or large size) on the film material or resin structure 16. The precision die cutting operation is performed on or slightly offset from the intended pattern of single elements (*i*.*e*., the planned transfer pattern). The amount and direction of offset can be adjusted to optimize the sought after result of cleanly transferring the desired pattern. The accuracy of die cutting to transfer pattern is maintained at a tolerance of less than about 1 millimeter (mm), preferably less than about 0.2 mm.

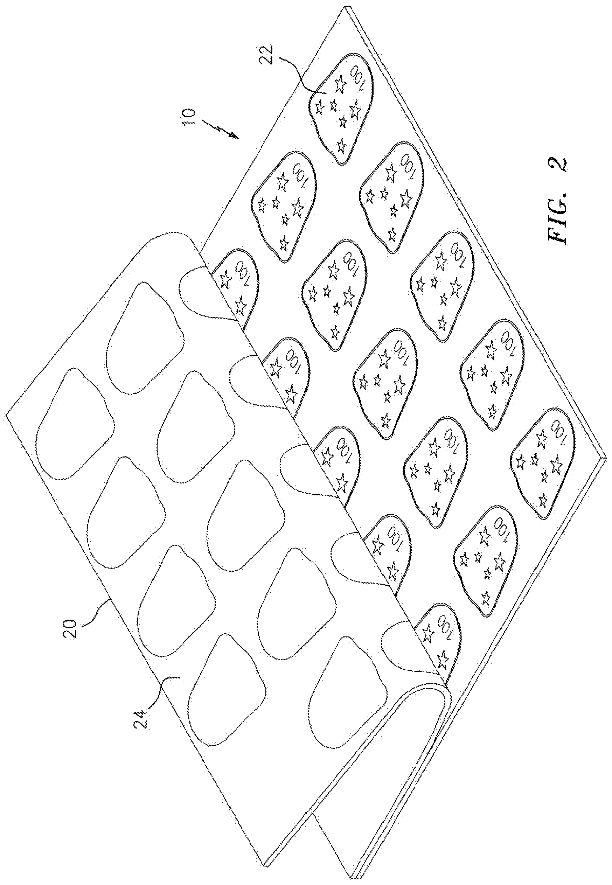

Once the sacrificial carrier substrate 20 is brought into contact with the precision cut sheet, a patterned and heated stamping die is used to precisely press and heat areas surrounding the cut single elements (*i*.*e*., background or waste areas) causing the adhesive to adhere to the sacrificial substrate. As best shown in **FIG. 2**, the two webs are then separated, thereby transferring background or waste areas 24 surrounding the cut single elements 22 from the precision cut sheet to the sacrificial carrier substrate 20, leaving cut, isolated single elements 22 behind. The patterned die stamping operation can be performed using precision rotary or intermittent motion flat-bed stamping. As will be appreciated by those skilled in the art, the operating temperature(s) used during the patterned die stamping operation is adjusted based on, for example, the processing speed, and factors including thermal transfer properties and adhesive bonding conditions. The speed is adjusted based on the temperature(s), dwell time(s), as well as adhesive and thermal transfer properties.

A rotary machine was used to execute the inventive dual transfer process using a web measuring 200 mm in width with a repeat period of 70 centimeters (cm). Speeds of greater than 30 meters per minute were demonstrated. Registration between the die and stamping operations achieved the required tolerance to successfully remove the waste areas or regions in precise alignment. A resin coated paper was used for the sacrificial carrier substrate. The rotary machine was capable of synchronizing to pre-defined design elements on the starting web. An eyespot was used to synchronize the web to the rotary machine.

Once prepared, the inventive transfer sheet 10 with sharply defined single elements 22 (*e*.*g*., a web of isolated patches or long strips) may be handled like a traditional transfer foil, that is, the material can be wound and unwound from a roll. The web of patches or long strips, which are matched with adhesive one for one, may be easily used by a downstream operation to transfer clean and consistent patches or strips to, for example, high value documents. The long strips may span the entire length of the high value document. As noted above, the complexity of the patches or long strips may be increased to provide additional security and tamper resistance. For example, holes/islands may be further included in the transferred patch or strip.

In a subsequent step or downstream operation, which is best shown in **FIG. 3**, a heated or hot stamping die 26 that is optionally sized larger (*e*.*g*., 1 to 5 mm larger) than the sharply defined single elements 22 is used to transfer the single elements from the transfer sheet 10 to objects to be protected (*e*.*g*., banknotes) 28. By way of example, a high value document converting machine such as an OPTI-NOTA™ or similar machine may be used to transfer the single elements to a required position over a banknote by detection of suitable register marks to locate the single element directly under the hot stamping die 26 carried by the converting machine. This causes the adhesive to be bonded to the banknote to secure the single element in the required position.

In an exemplary embodiment in which the transfer sheet 10 is a web of isolated patches, an eyespot is incorporated on the web, which is used by an OPTI-NOTA™ converting machine to synchronize the web of isolated patches to one or more hot stamping dies of the converting machine. The web of isolated patches is brought into contact with the hot stamping die(s), which is larger than the isolated patches. The size of the hot stamping die(s) is only limited by the need to avoid contacting any surrounding patches. A web of high value documents is then precisely brought into contact with the hot stamping die(s) and the web of isolated patches, each patch containing an adhesive layer facing the web of high value documents. A series of rollers press the web of high value documents against the web of isolated patches and the hot stamping die(s). The adhesive regions flow onto and into the high value documents. After a cooling period, the web of isolated patches is peeled from the web of high security documents leaving the patches behind on the documents. The empty web is optionally run through the converting machine to remove remaining patches or wound to a waste take-up reel. Operating conditions such as heat or temperature, pressure and speed can be adjusted to optimize the transfer of the patches to the documents.

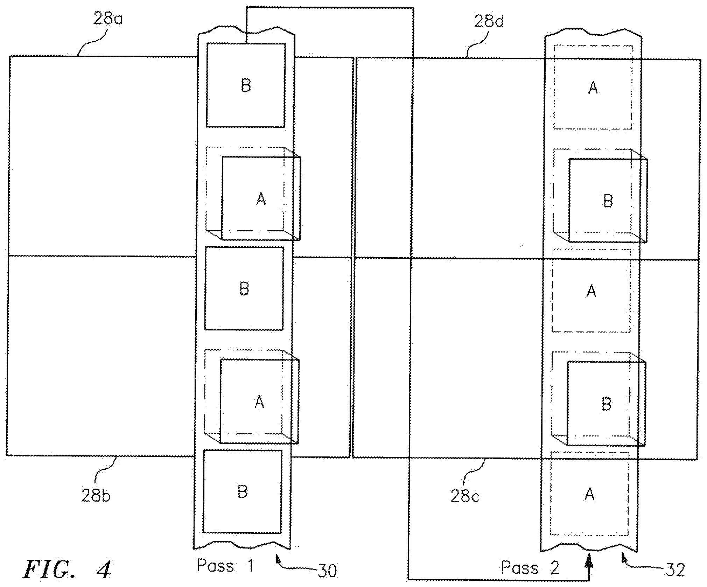

It is not unusual for such a machine to have nested regions on the web of isolated patches or roll of patterned film. The amount of overlap is a function of the registration accuracy of the patterned web and converting machine. In one such embodiment, as shown in **FIG. 4**, the height of transferred patches or regions A, B is significantly less than the total height of each banknote 28a, 28b, 28c, 28d. In this embodiment, two or more groups of patches or regions can be transferred on each pass of the web through the machine. In the case of two passes, odd patches or regions *(i.e.,* regions A) might be transferred on a first transfer operation 30 (Pass 1) and the even patches or regions *(i.e.,* regions B) might be transferred on a second transfer operation 32 (Pass 2). As will be readily appreciated by those skilled in the art, passing the same web or material two or more times through a converting machine increases the yield of the material.

As evident from the above description, the present invention provides a wider operating window for reliable conversion. An additional benefit is a much higher web to transferred single element utilization ratio. The transferred single elements can be placed closer to the edge of the carrier substrate and closer to each other. Area yield improvements on the order of 100% may be possible with the inventive process.

In addition, more complex object shapes may be formed using the inventive process resulting in better artistic integration and increased resistance to simulation. Another benefit is the ability to examine the film material or resin structure in the background or waste areas on the sacrificial carrier substrate. It is hard to monitor quality aspects of the film material or resin structure before transfer, so this added benefit presents a valuable quality control opportunity.

While various embodiments of the present invention have been described above it should be understood that they have been presented by way of example only, and not limitation. Thus, the breadth and scope of the present invention should not be limited by any of the exemplary embodiments.

## Claims

1. A pre-patch transfer sheet (10) comprising:
a carrier substrate (12); and
a pre-patch transfer assembly (14,16,18) that is affixed along a first side of the carrier substrate and comprising:
at least one isolated element (22) for transfer having (i) a micro-optic film material assembly (16) that produces an image, and (ii) an adhesive layer (18) affixed along a first side of the micro-optic film material assembly opposite the carrier substrate; and
a background area from which material has been removed that is adjacent to or surrounds the at least one isolated element for transfer,
**characterised in that** the image is a synthetic image, wherein the image is synthetized by the united performance of a multiplicity of individual focusing element/image icon systems, wherein each focusing element magnifies a dot/very small space of the image below the focusing element, the dots are then combined and projected, thus leading to a magnified image, which is a synthetic image.

2. The pre-patch transfer sheet of claim 1, wherein a separation layer is disposed between the carrier substrate and the pre-patch transfer assembly.

3. The pre-patch transfer sheet of claim 1, wherein the pre-patch transfer assembly comprises a plurality of alternating isolated elements for transfer and background areas.

4. The pre-patch transfer sheet of claim 1, wherein the adhesive layer is discontinuous such that at least one of a longitudinal or latitudinal dimension of the adhesive layer is equivalent to or smaller than a corresponding dimension of the micro-optic film material assembly.

5. The pre-patch transfer sheet of claim 1, wherein the at least one isolated element for transfer has a straight edge.

6. The pre-patch transfer sheet of claim 2, wherein the separation layer comprises a relief structure.

7. The pre-patch transfer sheet of claim 1, wherein the at least one isolated element for transfer is in the form of a patch or a stripe.

8. A method of preparing a pre-patch transfer sheet comprising:
(a) providing a carrier substrate;
(b) applying a separation layer to a surface of the carrier substrate;
(c) applying a micro-optic film material assembly that produces a synthetic image, wherein the image is synthetized by the united performance of a multiplicity of individual focusing element/image icon systems, wherein each focusing element magnifies a dot/very small space of the image below the focusing element, the dots are then combined and projected, thus leading to a magnified image, which is a synthetic image, to a surface of the separation layer on the carrier substrate;
(d) applying an adhesive layer to a surface of the micro-optic film material assembly;
(e) cutting through at least one of the adhesive layer, the micro-optic film material assembly or the separation layer to form a plurality of isolated elements for transfer and a background area adjacent or surrounding the cut isolated elements for transfer.

9. The method of claim 8, further comprising transferring the background area adjacent or surrounding the cut isolated elements from the carrier substrate and leaving the cut isolated elements for transfer.

10. The method of claim 8 or 9, further comprising transferring at least one of the plurality of isolated elements for transfer to an object to be protected.

11. The method of claim 10, wherein the object to be protected is a security document.

12. The method of claim 11, wherein transferring the at least one of the isolated elements for transfer comprises contacting the adhesive layer to the security document and applying a die stamp to the carrier substrate to affix the adhesive layer to the security document.

13. The method of claim 12, wherein the die stamp comprises pressure points that are in register with the isolated element for transfer.

14. A pre-patch transfer die-cut sheet comprising:
a carrier substrate;
a pre-patch transfer assembly that is affixed along a first side of the carrier substrate and comprising:
at least one isolated element for transfer having (i) a micro-optic film material assembly that produces a synthetic image, wherein the image is synthetized by the united performance of a multiplicity of individual focusing element/image icon systems, wherein each focusing element magnifies a dot/very small space of the image below the focusing element, the dots are then combined and projected, thus leading to a magnified image, which is a synthetic image, and (ii) an adhesive layer affixed along a first side of the micro-optic film material assembly opposite the carrier substrate; and
a background or waste region adjacent to or surrounding the at least one isolated element for transfer that is affixed along the first side of the carrier substrate and that is separated from the at least one isolated element for transfer by one or more cut marks.

15. The pre-patch transfer die-cut sheet of claim 14, further comprising a separation layer between the carrier substrate and the pre-patch transfer assembly and background or waste area.

## Patentansprüche

1. Prepatch-Transferfolie (10) umfassend:
ein Trägersubstrat (12); und
eine Prepatch-Transferkombination (14, 16, 18), die entlang einer ersten Seite des Trägersubstrats befestigt ist und umfasst:
wenigstens ein isoliertes Element (22) zum Transfer mit (i) einer mikrooptischen Filmmaterialkombination (16), die ein Bild erzeugt, und (ii) einer entlang einer ersten Seite der mikrooptischen Filmmaterialkombination gegenüber dem Trägersubstrat befestigten Klebeschicht (18); und
einen Hintergrundbereich, von dem Material entfernt wurde, welches an das wenigstens eine isolierte Element zum Transfer angrenzt oder dieses umgibt, **dadurch gekennzeichnet, dass** das Bild ein synthetisches Bild ist, wobei das Bild durch die vereinte Leistung einer Mehrzahl von einzelnen Fokussierelement-/Bildsymbolsystemen synthetisiert wird,
wobei jedes Fokussierelement einen Punkt / sehr kleinen Raum des Bildes unter dem Fokussierelement vergrößert und die Punkte anschließend kombiniert und projiziert werden, was zu einem vergrößerten Bild führt, das ein synthetisches Bild ist.

2. Prepatch-Transferfolie nach Anspruch 1, wobei eine Trennschicht zwischen dem Trägersubstrat und der Prepatch-Transferkombination angeordnet ist.

3. Prepatch-Transferfolie nach Anspruch 1, wobei die Prepatch-Transferkombination eine Vielzahl von abwechselnden isolierten Elementen zum Transfer und Hintergrundbereichen umfasst.

4. Prepatch-Transferfolie nach Anspruch 1, wobei die Klebeschicht diskontinuierlich ist, so dass ein Längs- oder/und Breitenmaß der Klebeschicht kleiner gleich einem entsprechenden Maß der mikrooptischen Filmmaterialkombination ist.

5. Prepatch-Transferfolie nach Anspruch 1, wobei das wenigstens eine isolierte Element zum Transfer eine gerade Kante aufweist.

6. Prepatch-Transferfolie nach Anspruch 2, wobei die Trennschicht eine Reliefstruktur umfasst.

7. Prepatch-Transferfolie nach Anspruch 1, wobei das wenigstens eine isolierte Element zum Transfer in der Form eines Fleckens oder eines Streifens vorliegt.

8. Verfahren zum Vorbereiten einer Prepatch-Transferfolie umfassend:
(a) Bereitstellen eines Trägersubstrats;
(b) Aufbringen einer Trennschicht auf einer Oberfläche des Trägersubstrats;
(c) Aufbringen einer mikrooptischen Filmmaterialkombination, die ein synthetisches Bild erzeugt, wobei das Bild durch die vereinte Leistung einer Mehrzahl von einzelnen Fokussierelement-/Bildsymbolsystemen synthetisiert wird, wobei jedes Fokussierelement einen Punkt / sehr kleinen Raum des Bildes unter dem Fokussierelement vergrößert und die Punkte anschließend kombiniert und projiziert werden, was zu einem vergrößerten Bild führt, das ein synthetisches Bild ist, auf einer Oberfläche der Trennschicht auf dem Trägersubstrat;
(d) Aufbringen einer Klebschicht auf einer Oberfläche der mikrooptischen Filmmaterialkombination;
(e) Durchschneiden von wenigstens einem Element der Gruppe umfassend die Klebschicht, die mikrooptische Filmmaterialkombination oder die Trennschicht, um eine Vielzahl von isolierten Elementen zum Transfer und einen Hintergrundbereich angrenzend an die geschnittenen isolierten Elementen zum Transfer oder diese umgebend zu bilden.

9. Verfahren nach Anspruch 8, ferner umfassend das Transferieren des Hintergrundbereichs angrenzend an die geschnittenen isolierten Elemente oder diese umgebend vom Trägersubstrat und Belassen der geschnittenen isolierten Elementen zum Transfer.

10. Verfahren nach Anspruch 8 oder 9, ferner umfassend das Transferieren von wenigstens einem der Vielzahl von isolierten Elementen zum Transfer auf ein zu schützendes Objekt.

11. Verfahren nach Anspruch 10, wobei das zu schützende Objekt ein Sicherheitsdokument ist.

12. Verfahren nach Anspruch 11, wobei das Transferieren des wenigstens einen der isolierten Elemente den Kontakt der Klebeschicht mit dem Sicherheitsdokument und das Aufbringen eines Trockenstempels auf dem Trägersubstrat zum Befestigen der Klebeschicht am Sicherheitsdokument umfasst.

13. Verfahren nach Anspruch 12, wobei der Trockenstempel Druckpunkte umfasst, die mit dem isolierten Element zum Transfer registerhaltig sind.

14. Prepatch-Transferstanzfolie umfassend: ein Trägersubstrat;
eine Prepatch-Transferkombination, die entlang einer ersten Seite des Trägersubstrats befestigt ist und umfasst:
wenigstens ein isoliertes Element zum Transfer mit (i) einer mikrooptischen Filmmaterialkombination, die ein synthetisches Bild erzeugt, wobei das Bild durch die vereinte Leistung einer Mehrzahl von einzelnen Fokussierelement-/Bildsymbolsystemen synthetisiert wird,
wobei jedes Fokussierelement einen Punkt / sehr kleinen Raum des Bildes unter dem Fokussierelement vergrößert und die Punkte anschließend kombiniert und projiziert werden, was zu einem vergrößerten Bild führt, das ein synthetisches Bild ist, und (ii) eine entlang einer ersten Seite der mikrooptischen Filmmaterialkombination gegenüber dem Trägersubstrat befestigte Klebeschicht; und
einen Hintergrund- oder Ausschussbereich angrenzend an das wenigstens eine isolierte Element zum Transfer oder dieses umgebend, der entlang der ersten Seite des Trägersubstrats befestigt ist und der vom wenigstens einen isolierten Element zum Transfer durch eine oder mehrere Schneidmarken getrennt ist.

15. Prepatch-Transferstanzfolie nach Anspruch 14, ferner umfassend eine Trennschicht zwischen dem Trägersubstrat und der Prepatch-Transferkombination und dem Hintergrund- oder Ausschussbereich.

## Revendications

1. Feuille de transfert de pré-patch (10) comprenant :
un substrat de support (12) ; et
un ensemble de transfert de pré-patch (14, 16, 18) qui est fixé le long d'un premier côté du substrat de support et comprenant :
au moins un élément isolé (22) pour transfert ayant (i) un ensemble de matériau de film micro-optique (16) qui produit une image, et (ii) une couche adhésive (18) fixée le long d'un premier côté de l'ensemble de matériau de film micro-optique en vis-à-vis du substrat de support ; et
une zone d'arrière-plan de laquelle un matériau a été retiré qui est adjacente au au moins un élément isolé pour transfert, ou entoure celui-ci,
**caractérisée en ce que** l'image est une image synthétique, dans laquelle l'image est synthétisée par l'exécution combinée d'une multiplicité de systèmes individuels d'élément de focalisation/icône d'image, dans laquelle chaque élément de focalisation grossit un point/très petit espace de l'image sous l'élément de focalisation, les points sont ensuite combinés et projetés, donnant ainsi une image agrandie, qui est une image synthétique.

2. Feuille de transfert de pré-patch selon la revendication 1, dans laquelle une couche de séparation est disposée entre le substrat de support et l'ensemble de transfert de pré-patch.

3. Feuille de transfert de pré-patch selon la revendication 1, dans laquelle l'ensemble de transfert de pré-patch comprend une pluralité d'éléments isolés pour transfert et des zones d'arrière-plan alternés.

4. Feuille de transfert de pré-patch selon la revendication 1, dans laquelle la couche adhésive est discontinue de sorte qu'au moins l'une parmi une dimension longitudinale ou latitudinale de la couche adhésive est équivalente ou inférieure à une dimension correspondante de l'ensemble de matériau de film micro-optique.

5. Feuille de transfert de pré-patch selon la revendication 1, dans laquelle le au moins un élément isolé pour transfert a un bord rectiligne.

6. Feuille de transfert de pré-patch selon la revendication 2, dans laquelle la couche de séparation comprend une structure en relief.

7. Feuille de transfert de pré-patch selon la revendication 1, dans laquelle le au moins un élément isolé pour transfert se présente sous la forme d'un patch ou d'une bande.

8. Procédé de préparation d'une feuille de transfert de pré-patch comprenant les étapes consistant à :
(a) fournir un substrat de support ;
(b) appliquer une couche de séparation sur une surface du substrat de support ;
(c) appliquer un ensemble de matériau de film micro-optique qui produit une image synthétique, l'image étant synthétisée l'exécution combinée d'une multiplicité de systèmes individuels d'élément de focalisation/icône d'image, dans lequel chaque élément de focalisation grossit un point/très petit espace de l'image sous l'élément de focalisation, les points sont ensuite combinés et projetés, donnant ainsi une image agrandie, qui est une image synthétique, sur une surface de la couche de séparation située sur le substrat de support ;
(d) appliquer une couche adhésive sur une surface de l'ensemble de matériau de film micro-optique ;
(e) découper à travers au moins l'un parmi la couche adhésive, l'ensemble de matériau de film micro-optique ou la couche de séparation pour former une pluralité d'éléments isolés pour transfert et une zone d'arrière-plan adjacente aux éléments isolés pour transfert découpés, ou entourant ceux-ci.

9. Procédé selon la revendication 8, consistant en outre à transférer la zone d'arrière-plan adjacente aux éléments isolés découpés, ou entourant ceux-ci, depuis le substrat de support et à laisser les éléments isolés pour transfert découpés.

10. Procédé selon la revendication 8 ou 9, comprenant en outre le transfert d'au moins un de la pluralité d'éléments isolés pour transfert sur un objet à protéger.

11. Procédé selon la revendication 10, dans lequel l'objet à protéger est un document de sécurité.

12. Procédé selon la revendication 11, dans lequel le transfert du au moins un des éléments isolés pour transfert comprend la mise en contact de la couche adhésive avec le document de sécurité et l'application d'un poinçon matriciel sur le substrat de support pour fixer la couche adhésive sur le document de sécurité.

13. Procédé selon la revendication 12, dans lequel le poinçon matriciel comprend des points de pression qui sont alignés avec l'élément isolé pour transfert.

14. Feuille prédécoupée de transfert de pré-patch comprenant :
un substrat de support ;
un ensemble de transfert de pré-patch qui est fixé le long d'un premier côté du substrat de support et comprenant :
au moins un élément isolé pour transfert ayant (i) un ensemble de matériau de film micro-optique qui produit une image synthétique, dans laquelle l'image est synthétisée par l'exécution combinée d'une multiplicité de systèmes individuels d'élément de focalisation/icône d'image, dans laquelle chaque élément de focalisation grossit un point/très petit espace de l'image sous l'élément de focalisation, les points sont ensuite combinés et projetés, donnant ainsi une image agrandie, qui est une image synthétique, et (ii) une couche adhésive fixée le long d'un premier côté de l'ensemble de matériau de film micro-optique en vis-à-vis du substrat de support ; et
une région d'arrière-plan ou de perte adjacente au au moins un élément isolé pour transfert, ou entourant celui-ci, qui est fixée le long du premier côté du substrat de support et qui est séparée du au moins un élément isolé pour transfert par une ou plusieurs marques découpées.

15. Feuille prédécoupée de transfert de pré-patch selon la revendication 14, comprenant en outre une couche de séparation entre le substrat de support et l'ensemble de transfert de pré-patch et la zone d'arrière-plan ou de perte.
